# EUROPÄISCHE PATENTSCHRIFT

(11) **EP 1 484 592 B1**
(45) Veröffentlichungstag und Bekanntmachung des Hinweises auf die Patenterteilung: **05.04.2006**
(21) Anmeldenummer: 04450098.1
(22) Anmeldetag: 28.04.2004
(51) Int. Cl.: G01M 17/00, G01M 15/00, G01M 13/00

(54) **Anordnung zur Bedienung eines Prüfstandes**
Arrangement for operating a test bench
Arrangement de commande d' un banc d' éssais

(30) Priorität: 04.06.2003 AT 3912003
(43) Veröffentlichungstag der Anmeldung: 08.12.2004
(73) Patentinhaber: AVL List GmbH, 8020 Graz (AT)
(72) Erfinder: Emmerer, Peter, Ing., 8055 Graz (AT); Buchalla, Harald, Dr.-Ing., 8051 Lieboch (AT); Dampf, Gerhard, Ing., 8063 Eggersdorf (AT)
(74) Vertreter: Pinter, Rudolf

(56) Entgegenhaltungen:
- "PRUEFSTAND ZUR ERPROBUNG VON TURBOMASCHINEN" MAN BERICHTEN, OBERHAUSEN, DE, Nr. 88470, 11. Mai 1990 (1990-05-11), XP000118816

## Beschreibung

Die Erfindung betrifft eine Anordnung zur Bedienung eines Prüfstandes, insbesonders eines Motor-, Bremsen-, Getriebe-, Antriebsstrang- oder Fahrzeugprüfstandes, mit einer Anzahl von im wesentlichen elektrischen und elektronischen Mess- und Auswerteeinrichtungen, die einerseits mit Sensoren und Signalaufbereitungsgeräten im räumlich entfernten Prüfraum und andererseits mit Anzeige-, Bedien- und Ausgabeeinheiten an einem Bedienplatz verbunden sind.

Der klassische Prüfstand, insbesonders beispielsweise Motorenprüfstand, mit bekannten Anordnungen der eingangs genannten Art, ist speziell in den letzten Jahren einigen signifikanten Änderungen unterworfen worden. Während die Prüfzelle mit dem Prüfling und beispielsweise einer Belastungseinrichtung einerseits und der Bedienraum mit dem die Messtechnik aufweisenden Prüfstandspult andererseits früher baulich fast ausnahmslos nebeneinanderliegend und durch ein Fenster für den Sichtkontakt miteinander verbunden waren, ist dieser Verbund heutzutage wegen der Teilung des Prüfstandskernes in Messtechnik mit Intelligenz, welche in Form von Frontendsystemen (FEM's) direkt an den Prüfling (Motor) verlegt wurde, und die Rechenleistung, welche wegen der immer komplexer werdenden Operationen und Messungen auf mehrere schnelle PCs aufgeteilt wurde, nicht mehr erforderlich.

Sondermesstechnik wie Kraftstoff- und Ölverbrauch, Blow By und Abgasanalyse etc. wanderten ebenso als "intelligente Sensoren" in unmittelbare Nähe des Motors. Sie sind im Bedienraum nur mehr als Bildschirmmasken präsent. Leistungsfähige elektronische und optische Datenverbindungen zwischen der Messtechnik und den PCs machen die Entfernung Motor/Messpult unproblematisch. Tonübertragung und Webcameras machen die Sichtverbindung zum Prüfling obsolet. Ganze Prüffelder, welche aus unterschiedlichen Messzellen für verschiedenste Motorarten und -größen bestehen, werden aus Verfügbarkeitsgründen, aus logistischen Überlegungen und aus investitionsminimierenden Gründen immer wieder neu konfiguriert.

Dies alles bedingt aber auch, dass die zugehörigen Bedienpulte immer wieder andere Aufgaben übernehmen müssen und eigentlich zu Visualisierungs- und Interaktionsflächen werden, welche nur mehr über Datenleitungen mit den Motorprüfzellen verbunden bzw. vernetzt sind. Da bei der Motoroptimierung wegen der komplexen Zusammenhänge immer mehr Spezialisten am gleichen Motor Untersuchungen durchführen müssen, so besteht die Notwendigkeit, mehreren Personen unabhängig voneinander die Arbeit an einer gemeinsamen Visualisierungsoberfläche zu ermöglichen. Dabei soll der das Versuchsprogramm absolvierende Operator nicht behindert werden. Die gegenseitige Beeinflussung der involvierten Disziplinen führt naturgemäß auch zu einem erhöhten Diskussionsbedarf und Gedankenaustausch der beteiligten Personen. Dies verlangt nach einem Kommunikationsort für das interdisziplinäre Entwicklungsteam, von dem aus Daten vom aktuellen Prüflauf kopiert und diskutiert werden können, ohne den Prüfstandsbetrieb zu behindern oder gestört zu werden.

Gemäß bekannter Ausführung und klassischem Aufbau besteht also beispielsweise ein Motorenprüfstand, wie er bis dato verwendet wird, aus einer Testzelle in welcher sich der Prüfling (Motor), die Belastungseinheit (Bremse) sowie Motormesstechnik (intelligente Sensoren) befinden, und einem Bedienraum, in welchem das sogenannte Bedienpult ortsfest normalerweise vor dem Fenster zur Testzelle angeordnet ist. Testzelle und Bedienraum sind in der Regel mit einer Tür verbunden. Kundenspezifische Sicherheitsbestimmungen untersagen meist den Aufenthalt von Personen in der Testzelle bei laufendem Motor. Das Bedienpult gliedert sich in einen (oder mehrere) Schwenkrahmenschränke und den eigentlichen Pultteil (Tisch). Dieser ist die eigentliche Bedienoberfläche und gliedert sich in drei Bereiche
- Ein fensternaher Bereich für Monitor(e)
- Ein mittlerer Bereich für 19 Zoll Einbauten (Bedienelemente)
- Ein vorderer Bereich als Tischplatte, die fester Bestandteil des Pultes ist (Keyboards, Maus, Arbeitsbehelfe)

Der Bereich unter der Tischplatte ist je nach Komplexität der Prüfstandsausrüstung mit 19" Messtechnik gefüllt, welche in Unterkästen montiert ist. Auf Ergonomie ist bei der Anordnung des Sitzplatzes zu achten. Das Bedienpult ist in der derzeitigen Form auf eine Ein-Mann-Bedienung ausgerichtet. In der Testzelle ist die Messtechnik (intelligente Sensorik) meist sehr prüflingsnahe angeordnet, während die Medienversorgung (Kühlwasser, Öl, Treibstoff etc.) und deren Konditionierung sehr unterschiedlich angeordnet ist (Testzellenwand, Unterflur, Trollyversionen etc.). Über dem Prüfling befindet sich über Kopfhöhe der Prüfstandsgalgen, dessen Galgenkopf bei älteren Applikationen nur als Steckerschnittstelle ausgebildet war - in den letzten Jahren jedoch in stark zunehmenden Maß auch intelligente Messwertvoraufbereitung sowie das gesamte Signalconditioning enthält.

Diese Anhäufung von Messtechnik rund um den Motor hat beim Aufbau der Messanordnung einerseits komplexe Rüstzeiten und umfangreiche Test- und Kalibrierarbeiten zur Folge, andererseits wird im Bedienraum das Bedienpult von Elektronik befreit bzw. entlastet. Trotzdem ist das bestehende modulare Bedienpult für starr konfigurierte Einmannbedienung ausgelegt und für interdisziplinäre Teamarbeit, wie sie in zunehmendem Maß technisch und auch wirtschaftlich notwendig wird, nur mehr mangelhaft geeignet. Die zur Motoroptimierung notwendige, immer umfangreicher werdende Messtechnik bringt noch eine weitere Herausforderung mit sich. So steigt die Zahl der zur Visualisierung der Messwerte notwendigen Monitore spürbar an; gleichzeitig ermöglicht der technologische Fortschritt komfortablere Bildschirmdiagonalen. Das führt bei leistungsfähigen Prüfständen dazu, dass bei fünf bis sechs Monitoren sich die "Bedienoberfläche" über drei und mehr Meter erstreckt. Dieser Umstand ist nicht nur unergonomisch, sondern erfordert auch ein gründliches Umdenken bei der Gestaltung der Visualisierungsmittel.

Ausgangspunkt für die vorliegende Erfindung ist eine aus obigem gezogene Schlussfolgerung, dass der einstige "Prüfstand" für verschiedene Prüflinge bzw. Prüfaufgaben mittlerweile mit einer zweckmäßigerweise hochflexibel zu gestaltenden Bürolandschaft verschmilzt, welche auf die Möglichkeiten der mittlerweile zum Einsatz kommenden offenen Automatisierungssoftware eingehen kann bzw. diese wiederspiegelt und über Normschnittstellen mit anderen Systemen kommunizieren kann. Der Ort und die konkrete Gestaltung dieser "Bürolandschaft" ist zumindest weitestgehend unabhängig vom Prüfstand bzw. konkret benützten Prüfraum.

Von diesen Überlegungen ausgehend stellt sich die vorliegende Erfindung die Aufgabe, Anordnungen der eingangs genannten Art so zu verbessern, dass entsprechende flexible Lösungen für die zu erfüllenden Aufgaben bereitgestellt werden können, wobei insbesonders Augenmerk auf die Ergonomie und einen leicht an die verschiedenen Aufgaben anzupassenden Aufbau der Anordnung zu legen ist.

Diese Aufgabe wird gemäß der vorliegenden Erfindung dadurch gelöst, dass die Mess- und Auswerteeinrichtungen in einem im Bedienraum frei platzierbaren, modular aufgebauten Schranksystem als technischem Geräteträger untergebracht sind, welches zumindest eine Tragkonsole aufweist, an der die Anzeige-, Bedien- und Ausgabeeinheiten angeordnet sind, und dass zumindest ein durch entsprechende Plattenhöhe und Fußanordnung über zumindest einen Teil von Unterschränken des modularen Schranksystems platzierbarer, relativ dazu frei bewegbarer Arbeits- und Ablagetisch als Bürooberfläche vorgesehen ist. Der damit verwirklichte Leitgedanke für die erfindungsgemäße Bedienanordnung eines Prüfstandes, bzw. eines gesamten, aus mehreren Prüfständen bestehenden Prüffeldes kann durch das Schlagwort "offenes System" charakterisiert werden; so wie die im Prufstandsbereich in ständig steigendem Ausmaß zum Einsatz kommende Automatisierungssoftware dem Benutzer offene Oberflächen zur Verfügung stellt und über Normschnittstellen mit anderen Systemen verbunden werden kann, so kann der Benutzer damit seine Bedienanordnung mit einem Höchstmaß an Flexibilität gestalten und trotzdem alle erforderlichen und speziell auf den jeweiligen Prüfstand bezogenen Einrichtungen angenehm und ergonomisch nutzen.

Im wesentlichen ist also vorgesehen, dass die speziellen prüfstandsbezogenen Einrichtungen mit Hilfe von ausgewählten, beispielsweise aus dem Bürobereich durchaus bekannten Möbelelementen zu einem neuartigen "Bedienpult" mit optionalen Zusatzeinrichtungen kombiniert werden. Es ist damit möglich, den Arbeits- und Ablagetisch als Bürooberfläche nicht mehr wie bisher an den Prüfstandsraum anschließend aufgestellt fest zu montieren, sondern wie in modernen Büro- und Konferenzräumen nach funktionellen und ästhetischen Gesichtspunkten aufzustellen und auszustatten. Die Anbindung an den Prüfstand und die Prüfstandsumgebung erfolgt durch leistungsfähige moderne leitungsgebundene oder drahtlose elektronische Datenverbindungen. Die Anbindung der elektronischen Komponenten kann verstellbar in den sonstigen Elementen des modularen Schranksystems erfolgen, womit der Arbeits- und Ablagetisch davon unabhängig beweglich bleibt, sodass er nach aktuellen Bedürfnissen gegenüber den sonstigen funktionellen Elementen des modularen Schranksystems frei bewegbar bzw. mit anderen Elementen oder entsprechenden Tischen gruppierbar ist.

Charakteristisch für diese neue Anordnung ist auch, dass das Bedienpersonal vor dem als Büroobertläche dienenden Tisch nicht mehr wie bisher mit dem Gesicht zum Prüfraum sitzen muss und durch ein Fenster auf den Prüfling im Prüfraum blickt, sondern seinen Platz im Bedienraum beliebig einnehmen kann. Bild- und Tonübertragung sowie die entsprechenden leitungsgebundenen oder drahtlosen Datenverbindungen zwischen Prüfraum und Bedienpult sind ausreichend, sodass auf das Fenster zum Prüfraum verzichtet werden kann. Dieses Konzept hat über die ergonomischen Vorteile hinaus Vorteile insbesonders bei derartigen Prüffeldem bzw. Prüfständen, bei denen kompakt vorgefertigte Prüfstände oder Prüf räume in dafür baulich vorbereitete Bereiche eingebracht werden, wobei der Platz entlang der unmittelbar an den Prüfraum angrenzenden Wände für, Systeme zur Prüfstandsversorgung und -messtechnik benötigt wird und daher nicht mehr für Bedienpulte zur Verfügung steht.

In besonders bevorzugter weiterer Ausgestaltung der Erfindung ist vorgesehen, dass das Schranksystem aus zumindest einem die Tragkonsole aufweisenden Zentralteil und zumindest einem daran vorzugsweise verschwenkbar angeordneten, vorzugsweise als Unterschrank ausgebildeten Zusatzcontainer besteht. Damit können verschiedene Kombinationen von Elementen des Schranksystems realisiert bzw. für bestimmte Prüfaufgaben optimiert zusammengestellt werden. Durch Kombination von zwei oder mehreren parallel angeordneten Zentralteilen, die dann beispielsweise auch nur von einer Seite her über entsprechende Öffnungen, Türen od. dgl. zugänglich sein können, kann die Kapazität der üblicherweise die Basiselemente einer derartigen Bedienanordnung aufweisenden Zentraleinheit entsprechend angepasst werden. In den verschwenkbar angeordneten Zusatzcontainem können verschiedene weitere Messgeräte, Bedienelemente und dgl. angeordnet werden, die für verschiedene Messaufgaben beispielsweise leicht zugänglich sein sollen oder öfter ausgetauscht werden müssen.

Im zuletzt genannten Zusammenhang besonders vorteilhaft ist eine weitere Ausgestaltung der Erfindung, gemäß welcher derartige Zusatzcontainer über Schwenkrahmen mit dem Zentralteil verbunden und damit relativ zu diesem ausschwenk- und begrenzt entfembar sind. Dies ermöglicht im Bedarfsfall eine leichte Zugänglichkeit zu den Zusatzcontainem und zum Zentralteil, während im zusammengeschwenkten Zustand der verschiedenen Elemente ein sehr kompakter Aufbau der Anordnung sichergestellt bleibt.

Die Tragkonsole kann in weiters bevorzugter Ausgestaltung der Erfindung zumindest einen im wesentlichen senkrecht und vorzugsweise im Bereich der auch die Schwenkachsen der Zusatzcontainer aufweisenden vorderen Seitenkante des Zentralteils angeordneten Steher aufweisen, welcher an einem Querträger zuminderst einen Anzeigemonitor angeordnet hat und welcher an zumindest einem schwenk-, falt- und/oder teleskopierbaren Ausleger zumindest eine über die Bürooberfläche platzierbare Bedientafel aufweist. Damit bleibt weiterhin der freibewegbare Arbeits- und Ablagetisch als Bürooberfläche erhalten - unmittelbare Bedien- und Anzeigeelemente sind über die Tragkonsole am Zentralteil fixiert, sodass ein sehr leichter Zugang zu den Zusatzcontainern und/oder zum Zentralteil möglich bleibt, wenn der Arbeits- und Ablagetisch weggeschoben oder entfernt wird. Der bzw. die Querträger können auch mehrere Anzeigemonitore (beispielsweise Flachbildschirme) aufweisen, die entweder separat verschiedenen Mess- und Anzeigeaufgaben zugeordnet oder aber gemeinsam als Großbildschirm genützt werden können. Die Bedientafel kann beispielsweise Tastaturen, Mauspads oder ähnliches aufweisen und ist über den bewegbaren Ausleger beliebig über die Bürooberfläche platzierbar bzw. zur Verbesserung der Zugänglichkeit zu dieser oder zu den sonstigen Elementen des Schranksystems ein- oder ausschwenkbar.

Die Zusatzcontainer und Tische können in bevorzugter weiterer Ausgestaltung der Erfindung auf Fahr- bzw. Verschiebeelementen, vorzugsweise Möbelrollen stehen, was ihre individuelle oder gemeinsame Beweglichkeit auf einfache Weise erleichtert.

Die Leitungsverbindungen zwischen Zentralteil und Zusatzcontainer des Schranksystems verlaufen in bevorzugter weiterer Ausgestaltung der Erfindung über im wesentlichen parallel nebeneinander über die Breite des/der Schwenkrahmen verlegte Kabelstränge, was die Bedienung erleichtert und die Ergonomie erhöht.

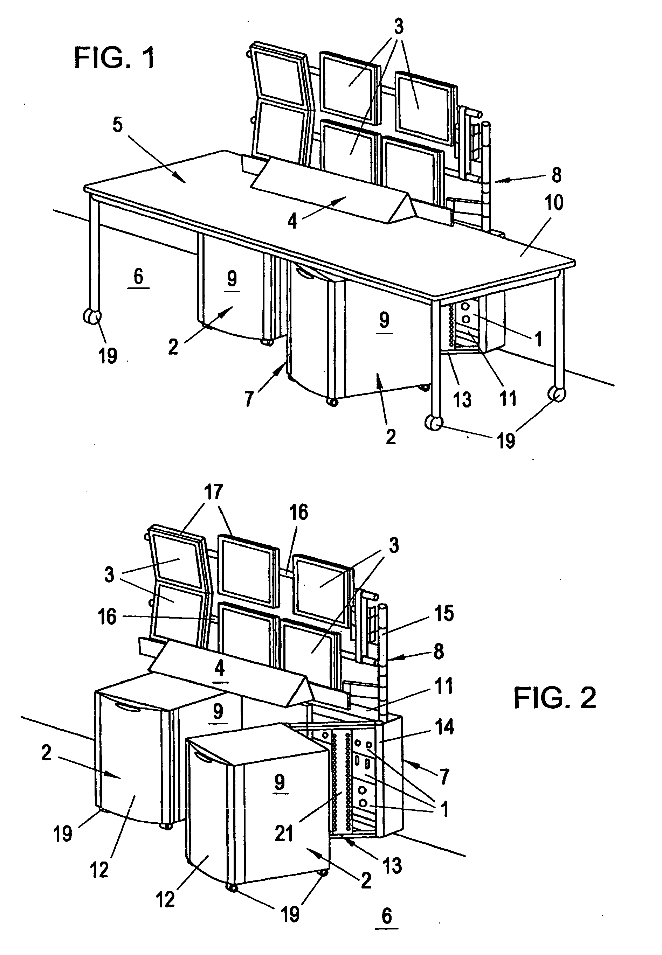

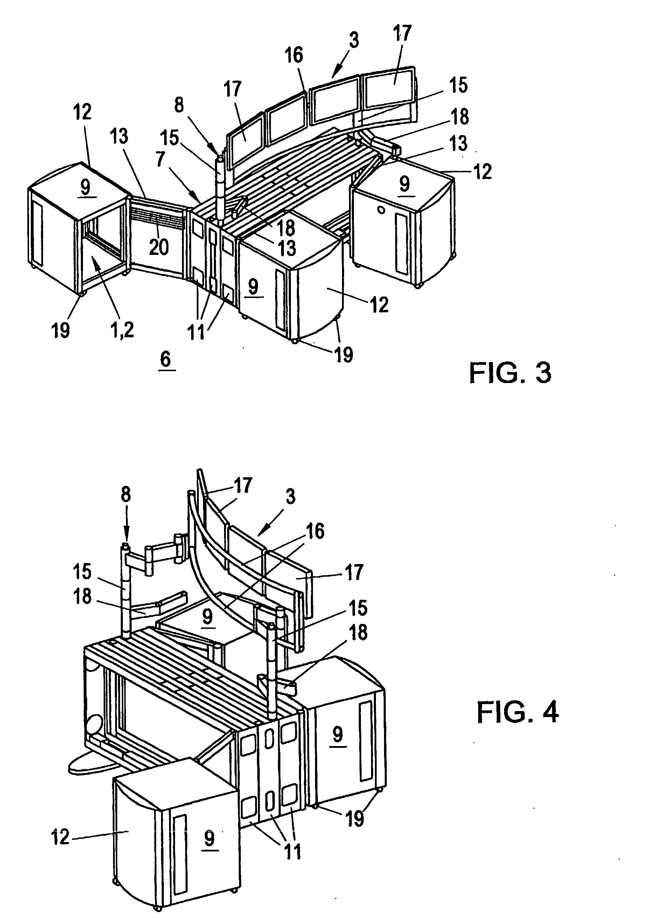

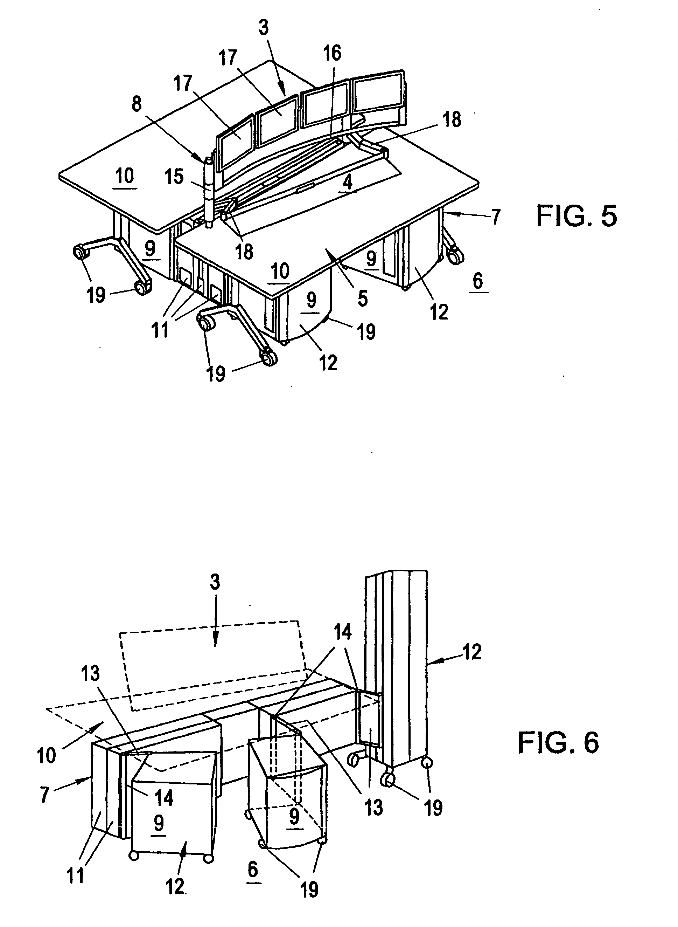

Die Erfindung wird im folgenden noch anhand der in der Zeichnung teilweise schematisch dargestellten Ausführungsbeispiele näher erläutert. Fig. 1 zeigt dabei eine erfindungsgemäße Anordnung in perspektivischer Ansicht und Fig. 2 die Anordnung gemäß Fig. 1 bei entferntem Arbeits- und Ablagetisch. Fig. 3 bis 5 zeigen ein weiteres Ausführungsbeispiel einer erfindungsgemäßen Bedienanordnung in unterschiedlichen Ansichten und Fig. 6 zeigt ein drittes Ausführungsbeispiel in schematischer perspektivischer Ansicht.

Die dargestellte Anordnung zur Bedienung eines nicht weiter dargestellten, zumeist räumlich entfernten Prüfstandes, wie insbesonders eines Motor-, Bremsen-, Getriebe-, Antriebsstrang- oder Fahrzeugprüfstandes, weist eine Anzahl von im wesentlichen elektrischen und elektronischen Mess- und Auswerteeinrichtungen (1, 2) auf, die einerseits mit hier nicht dargestellten Sensoren und Signalaufbereitungsgeräten im räumlich entfernten Prüfraum und andererseits mit Anzeige-, Bedien- und Ausgabeeinheiten (3, 4) am Bedienplatz 5 verbunden sind. Die Mess- und Auswerteeinrichtungen 1, 2 sind in einem im Bedienraum 6 frei platzierbaren, modular aufgebauten Schranksystem 7 als technischem Geräteträger untergebracht, welches zumindest eine Tragkonsole 8 aufweist, an der die Anzeige-, Bedien- und Ausgabeeinheiten 3, 4 angeordnet sind. Weiters ist zumindest ein durch entsprechende Plattenhöhe und Fußanordnung über zumindest einen Teil von Unterschränken 9 des modularen Schranksystems 7 platzierbarer, relativ dazu frei bewegbarer Arbeits- und Ablagetisch 10 als Bürooberfläche vorgesehen, der in Fig. 1 zusammen mit den sonstigen Elementen der Bedienanordnung dargestellt und in Fig. 2 zur Ermöglichung bzw. Vereinfachung des Zuganges zu den sonstigen Elementen entfernt ist.

Das Schranksystem besteht hier aus einem die Tragkonsole 8 aufweisenden Zentralteil 11 und zwei daran verschwenkbar angeordneten, als Unterschrank 9 ausgebildeten Zusatzcontainem 12, welche jeweils über Schwenkrahmen 13 mit dem Zentralteil 11 verbunden und damit relativ zu diesem ausschwenk- und begrenzt entfembar sind. Es ist damit - wie aus Fig. 2 ersichtlich ist - nach Entfernen des Tisches 10 eine ausgezeichnete Zugänglichkeit zu den Mess- und Auswerteeinrichtungen 1, 2 im Zentralteil 11 sowie auch zu den Anzeige-, Bedien- und Ausgabeeinheiten 3, 4 gegeben, sodass beispielsweise Nach- oder Umrüstungen in diesem Bereich sehr einfach vorgenommen werden können. Die Ausschwenkbarkeit der Unterschränke 9 bzw. auch weiterer gegebenenfalls vorgesehener Zusatzcontainer 12 ermöglicht eine relativ freie Platzierbarkeit dieser zusätzliche Mess- und Auswerteeinrichtungen enthaltenden Elemente, sodass insgesamt eine große Flexibilität sowohl in der Ausrüstung als auch Bedienung gegeben ist. Die Leitungsverbindungen zwischen dem Zentralteil 11 und den Zusatzcontainem 12 können in vorteilhafter Weise über parallel nebeneinander flachbandartig über die Breite der Schwenkrahmen 13 verlegte Kabelstränge verlaufen, welche an einer oder mehreren Halteleisten 21 fixiert werden können.

Die Tragkonsole 8 weist hier einen senkrecht im Bereich der auch die Schwenkachse 14 des Zusatzcontainers 12 aufweisenden vorderen Seitenkante des Zentralteils 11 angeordneten Steher 15 auf, welcher an zwei Querträgern 16 insgesamt sechs Anzeigemonitore 17 angeordnet hat und welcher weiters an zumindest einem schwenk- und faltbaren Ausleger 18 die über die Bürooberfläche bzw. den Arbeits- und Ablagetisch 10 platzierbare Bedientafel 4 trägt. Sowohl die Anzeigemonitore 17 als auch die Bedientafel 4 samt Keyboard, Maus, oder ähnlicher Elemente können dabei auch leitungslos mit den sonstigen Elementen in Verbindung stehen.

Die Zusatzcontainer 12 bzw. Unterschränke 9 stehen ebenso wie der Arbeits- und Ablagetisch 10 auf Möbelrollen 19, was das Verfahren bzw. Verschieben sehr vereinfacht Die Leitungsverbindungen zwischen den einzelnen Komponenten des Schranksystems 7 sind hier nicht dargestellt.

Die Anzeigeeinheiten 3 bzw. Monitore 17 könnten auch in anderen, teilweise kombinierten Konfigurationen vorgesehen werden, um beispielsweise eine Art Großbilddarstellung zu ermöglichen.

Bei den erfindungsgemäßen Anordnungen nach den Fig. 3 bis 6 sind zur Anordnung nach Fig. 1 und 2 gleiche oder zumindest von der Funktion her entsprechende Elemente mit gleichen Bezugszeichen versehen. Zur Vermeidung von Wiederholungen wird zusätzlich zu den folgenden Ausführungen auch auf die voranstehenden Ausführungen zu Fig. 1 und 2 verwiesen.

Bei der Anordnung nach den Fig. 3 bis 5 sind abweichend zu Fig. 1 und 2 nun drei Zentralteile 11 parallel kombiniert, womit für hier nicht dargestellte Mess- und Auswerteeinrichtungen 1, 2 naturgemäß wesentlich mehr Platz zur Verfügung steht. An den beiden äußeren dieser Zentralteile 11 sind an Schwenkrahmen 13 als Unterschränke 9 ausgebildete Zusatzcontainer 12 ausschwenkbar angeordnet, welche wiederum auf Möbelrollen 19 stehen und verschiedenste, ebenfalls nicht weiter dargestellte Mess- und Auswerteeinrichtungen aufnehmen können. Am mittleren der Zentralteile 11 sind hier beidseitig Steher 15 der Tragkonsole 8 vorgesehen, welche über zwei Querträger 16 vier Monitore 17 als Anzeigeeinheit tragen. Ebenfalls an den Stehern 15 angelenkt sind wiederum Ausleger 18 für die nur in Fig. 5 eingezeichnete Bedientafel 4.

Während in Fig. 3 und 4 die Anordnung in unbestücktem, geöffnetem und für Montage bzw. Austausch diverser Mess- und Auswerteeinrichtungen bzw. Anzeige-, Bedien- und Ausgabeeinheiten leicht zugänglich dargestellt ist, ist in Fig. 5 quasi der Betriebszustand dargestellt, wobei hier zwei Arbeits- und Ablagetische 10 vorgesehen sind. Es ist leicht vorstellbar, dass ausgehend von dem in Fig. 5 dargestellten Zustand nur die Tische 10 entfernt werden müssen, wonach durch entsprechendes Ausschwenken der Zusatzcontainer 12 sehr einfach und rasch Zugriff zu allen gegebenenfalls wesentlichen Bereichen des Schranksysterns besteht. Damit können für zusätzliche Messaufgaben beispielsweise sehr einfach entsprechende Mess- und Auswerteeinrichtungen zusätzlich eingebaut oder auch zusätzlich erforderliche Monitore 17 od.dgl. angebracht werden.

Bei dieser Anordnung ist in Fig. 3 im Schwenkrahmen 13 des in der Darsteiiung links außen dargestellten Zusatzcontainers 12 noch schematisch die Leitungsverbindung zwischen den Zentralteilen 11 bzw. den darin angeordneten Einrichtungen und dem Zusatzcontainer 12 bzw. den darin angeordneten Einrichtungen über parallel nebeneinander über die Breite des Schwenkrahmens 13 verlegte Kabelstränge 20 angedeutet. Es ergibt sich damit eine sehr einfache und flexible Verbindung zwischen den einzelnen Komponenten des Schranksystems 7, ohne dass die sonst üblichen zusammengefassten dicken Kabelbündel, deren Handhabung und geordnete Unterbringung im System schwierig ist, erforderlich wären. Diese Kabelstränge 20 können auf hier nicht weiter dargestellte Weise am Schwenkrahmen 13 festgelegt sein, beispielsweise über ortsfeste Schellen, Kabelbinder und ähnliches.

Bei der erfindungsgemäßen Anordnung nach Fig. 6 ist als wesendicher Unterschied zu den bisher besprochenen Anordnungen auf der rechten Seite ein Zusatzcontainer 12 angedeutet, der zwar wiederum über einen Schwenkrahmen 13 an einer Schwenkachse 14 des in der Darstellung rechten vorderen Zentralteils 11 angelenkt ist, nun aber eine wesentlich größere Höhe als die sonst als Unterschränke 9 ausgeführten anderen Zusatzcontainer 12 aufweist. Damit können hier bedarfsweise wesentlich mehr Mess- und Auswerteeinrichtungen bzw. sonstige Zusatzgeräte und ähnliches untergebracht werden. Die Anzeigeeinheit 3 ist hier nur symbolisch als Großbildschirm dargestellt - die ebenfalls nur strichliert eingezeichnete Platte des Ablagetisches 10 ist wiederum wie bei den anderen Ausführungen bedarfsweise von den sonstigen Elementen des Schranksystems 7 entfembar. Der mittlere der beiden als Unterschrank 9 ausgebildeten Zusatzcontainer ist hier an einem kürzer ausgebildeten Zentralteil 11 angelenkt und kann damit bedarfsweise auch zumindest teilweise in die zusammengestellten Zentralteile 11 eingeklappt integriert werden.

Im übrigen entspricht die Ausführung nach Fig. 6 im wesentlichen wiederum denen nach den Fig. 1 bis 5.

## Patentansprüche

1. Anordnung zur Bedienung eines Prüfstandes, insbesonders eines Motor-, Bremsen-, Getriebe-, Antriebsstrang- oder Fahrzeugprüfstandes, mit einer Anzahl von im wesentlichen elektrischen und elektronischen Mess- und Auswerteeinrichtungen (1, 2), die einerseits mit Sensoren und Signalaufbereitungsgeräten im räumlich entfernten Prüfraum und andererseits mit Anzeige-, Bedien- und Ausgabeeinheiten (3, 4) an einem Bedienplatz (5) verbunden sind, **dadurch gekennzeichnet, dass** die Mess- und Auswerteeinrichtungen (1, 2) in einem im Bedienraum (6) frei platzierbaren, modular aufgebauten Schranksystem (7) als technischem Geräteträger untergebracht sind, welches zumindest eine Tragkonsole (8) aufweist, an der die Anzeige-, Bedien- und Ausgabeeinheiten (3, 4) angeordnet sind, und dass zumindest ein durch entsprechende Plattenhöhe und Fußanordnung über zumindest einen Teil von Unterschränken (9) des modularen Schranksystems (7) platzierbarer, relativ dazu frei bewegbarer Arbeits- und Ablagetisch (10) als Bürooberfläche vorgesehen ist.

2. Anordnung nach Anspruch 1, **dadurch gekennzeichnet, dass** das Schranksystem (7) aus zumindest einem die Tragkonsole (8) aufweisenden Zentralteil (11) und zumindest einem daran vorzugsweise verschwenkbar angeordneten, vorzugsweise als Unterschrank (9) ausgebildeten Zusatzcontainer (12) besteht.

3. Anordnung nach Anspruch 2, **dadurch gekennzeichnet, dass** der Zusatzcontainer (12) über einen Schwenkrahmen (13) mit dem Zentralteil (11) verbunden und damit relativ zu diesem ausschwenk- und begrenzt entfernbar ist.

4. Anordnung nach Anspruch 2 oder 3, **dadurch gekennzeichnet, dass** die Tragkonsole (8) zumindest einen im wesentlichen senkrecht und vorzugsweise im Bereich der auch die Schwenkachse(n) (14) des (der) Zusatzcontainer(s) (12) aufweisenden vorderen Seitenkante des Zentralteils (11) angeordneten Steher (15) aufweist, welcher an einem Querträger (16) zumindest einen Anzeigemonitor (17) angeordnet hat und welcher an zumindest einem schwenk-, falt- und/oder tekeskopierbaren Ausleger (18) zumindest eine über die Bürooberfläche platzierbare Bedientafel (4) aufweist.

5. Anordnung nach einem der Ansprüche 2 bis 4, **dadurch gekennzeichnet, dass** zumindest zwei Zentralteile (11) parallel kombiniert sind.

6. Anordnung nach einem oder mehreren der Ansprüche 1 bis 5, **dadurch gekennzeichnet, dass** der/die Zusatzcontainer (12) und/oder der/die Arbeits- und Ablagetisch(e) (10) auf Fahr- bzw. Verschiebeelementen, vorzugsweise Möbelrollen (19), steht/stehen.

7. Anordnung nach Anspruch 3, **dadurch gekennzeichnet, dass** die Leitungsverbindungen zwischen dem/den Zentralteil(en) (11) und dem/den Zusatzcontainer(n) (12) über im wesentlichen parallel nebeneinander über die Breite des/der Schwenkrahmen (13) verlegte Kabelstränge (20) verlaufen.

## Claims

1. A device for operating a test bench, particularly an engine, brake, gear, drive line or vehicle test bench, with a number of essentially electrical and electronic measuring and evaluating devices (1, 2), which are on the one hand connected to sensors and signal processing devices in the spatially separate test room, and on the other to indicating, operating and output units (3, 4) at an operating station (5), **characterised in that** the measuring and evaluating devices (1, 2) are housed in a cabinet system (7) with a modular structure, designed as a technical device support and capable of being installed anywhere in the control room (6), which system has at least one support bracket (8) on which the indicating, operating and output units (3, 4) are arranged, and **in that** at least one work and storage desk (10) is provided as an office surface, which desk can be positioned above at least some of the floor units (9) of the modular cabinet system (7), and is freely movable relative to it by providing a suitable desk top height and leg arrangement.

2. The device according to Claim 1, **characterised in that** the cabinet system (7) consists of at least one central section (11) provided with the support bracket (8) and at least one additional container (12) arranged preferably so that it swivels on the bracket and designed preferably as a floor unit (9).

3. The device according to Claim 2, **characterised in that** the additional container (12) is connected to the central section (11) by means of a swivel frame (13), and can therefore be swivelled out relative to the central section and can be removed to a limited degree.

4. The device according to Claim 2 or 3, **characterised in that** the support bracket (8) has at least one stand (15) arranged essentially vertically and preferably in the region of the front lateral edge of the central section (11), which also has the swivel axis (axes) (14) of the additional container(s) (12), which stand has at least one indicating monitor (17) arranged on a crossbar (16) and which has at least one control panel (4) that can be positioned above the office surface on at least one jib (18) that can be swivelled, folded and/or telescoped.

5. The device according to Claims 2 to 4, **characterised in that** at least two central sections (11) are combined in parallel.

6. The device according to one or more of Claims 1 to 5, **characterised in that** the additional container(s) (12) and/or the work and storage table(s) (10) stand(s) on travelling or displacing elements, preferably castors (19) .

7. The device according to Claim 3, **characterised in that** the cable connections between the central section(s) (11) and the additional container(s) (12) run via cable conduits (20) laid essentially parallel with each other over the width of the swivel frame(s) (13).

## Revendications

1. Installation pour la commande d'un banc d'essai, notamment d' un banc d'essai de moteurs, de freins, de boîtes de vitesses, de transmissions ou de véhicules, avec une pluralité de dispositifs de mesure et de retraitement (1, 2) essentiellement électriques et électroniques, reliée d'une part à des capteurs et à des dispositifs de traitement des signaux situés dans le local d'essai distant et, d'autre part, à des unités d'affichage, de commande et de sortie (3, 4) situés à un poste de commande (5), **caractérisée en ce que** les dispositifs de mesure et de retraitement (1, 2) sont logés dans un système d'armoire modulaire (7) faisant office de support d'appareils technique, pouvant être déplacé librement dans le local de commande (6), présentant au moins une console (8) sur laquelle sont disposées les unités d'affichage, de commande et de sortie (3, 4), et **en ce qu'**au moins une table de travail et de décharge (10) est prévue pour faire office de surface de bureau, grâce à une hauteur de table et à une disposition des pieds appropriée, au-dessus d'au moins une partie des éléments bas (9) du système d'armoire modulaire (7), et peut être déplacée librement par rapport à celui-ci.

2. Installation selon la revendication 1, **caractérisée en ce que** le système d'armoire (7) se compose au moins d'une partie centrale (11) munie de la console (8) et au moins d'un conteneur supplémentaire (12) aménagé de préférence comme un élément bas (9) disposé sur celle-ci, de préférence de manière pivotante.

3. Installation selon la revendication 2, **caractérisée en ce que** le conteneur supplémentaire (12) est relié à la partie centrale (11) par le biais d'un cadre pivotant (13) et peut ainsi être éloigné par rapport à celui-ci par un pivotement limité.

4. Installation selon la revendication 2 ou 3, **caractérisée en ce que** la console (8) est munie au moins d'un pied (15) disposé sensiblement verticalement et de préférence dans la zone du bord latéral avant de la partie centrale (11), qui comporte aussi le(s) axe(s) de pivotement (14) du (des) conteneur(s) supplémentaire(s) (12), et qui est muni, sur une traverse (16), d'au moins un moniteur d'affichage (17) et qui présente, sur au moins un bras pivotant, repliable et/ou télescopique (18) au moins un tableau de commande (4) pouvant être placé sur la surface de bureau.

5. Installation selon l'une des revendications 2 à 4, **caractérisée en ce qu'**au moins deux parties centrales (11) sont combinées parallèlement.

6. Installation selon l'une ou plusieurs des revendications 1 à 5, **caractérisée en ce que** le/les conteneur(s) supplémentaire(s) (12) et/ou la/les table(s) de travail et de décharge (10) est/sont disposés sur des éléments lui/leur permettant de rouler ou de glisser, de préférence des roulettes pour meubles (19).

7. Installation selon la revendication 3, **caractérisée en ce que** les lignes de raccordement entre la/les partie(s) centrale(s) (11) et le/les conteneur(s) supplémentaire(s) (12) sont posés de manière sensiblement parallèle dans des faisceaux de câbles (20) disposés côte à côte sur la largeur du/des cadre(s) pivotant (s) (13).
